# EUROPEAN PATENT SPECIFICATION

(11) **EP 3 137 773 B1**
(45) Date of publication and mention of the grant of the patent: **01.04.2020**
(21) Application number: 15728152.8
(22) Date of filing: 16.04.2015
(51) Int. Cl.: F04D 15/00, F16K 27/06, F16K 11/085

(54) **EXTRACTABLE VALVE GROUP WITH IMPROVED OBTURATOR**
HERAUSZIEHBARE VENTILGRUPPE MIT VERBESSERTEM OBTURATOR
GROUPE DE SOUPAPES EXTRACTIBLE DOTÉ D'UN OBTURATEUR AMÉLIORÉ

(30) Priority: 28.04.2014 IT BS20140088
(43) Date of publication of application: 08.03.2017
(73) Proprietor: Industrie Saleri Italo S.P.A., 25065 Lumezzane, Brescia (IT)
(72) Inventor: PEDERSOLI, Marco, 25065 Lumezzane (IT); ZOBBIO, Rossano, 25065 Lumezzane (IT)
(74) Representative: Gamba, Alessandro
(86) International application number: PCT/IB2015/052786
(87) International publication number: WO 2015/166372

(56) References cited:
- WO-A1-2011/095907
- WO-A1-2014/060041
- WO-A1-2014/068417
- DE-A1-102008 006 451
- DE-B- 1 099 798

## Description

This invention relates to a valve group for a pump of a cooling circuit, in particular for vehicles, such as cars or motorcycles.

It is well known that the cooling pump, and the components that compose it, are the most important elements of a cooling circuit for heat engines, especially in vehicles. Thus, great attention is paid to the proper design of these components and the continuous improvement of their performance.

Examples of cooling pumps are illustrated in documents EP-A1-1503083, PCT/IT20091000269 and PCT/IB2011/050256, in the name of the Applicant, and in the document WO2014/1060041.

In particular, in documents PCT/IT2009/000269 and PCT/IB2011/050256, the obturator positioned downstream of the rotor plays an essential role.; moreover, in document PCT/IB2011/050256, the fact that the valve group is extractable from the pump in a cartridge.

In addition, an example of valve group is also disclosed in the document WO2014/068417 in the name of the Applicant; said document has priority date antecedent of the priority date of the present application but it was not public previously said priority date of the present application; hence, said document it is not relevant to the question of inventive step.

The main problem of said type of valve groups is that of effectively obstructing the passage of cooling liquid.

In known valve groups, attempts have been made to overcome this problem by developing solutions in which great attention has been paid to designing the obturator, lead-through and entrance and exit mouths of the lead-through. In the known art, the direction taken has therefore been to improve the interaction between, or the geometry of, the components of the pump, and in particular of the valve group.

Note that it is always required that the valve groups perform operations of partial or total obstruction of the passage of cooling liquid within them in a manner that is simple but, especially, effective and reproducible over time. This means that the valve groups must be effective in operations of obstruction, without however compromising their durability and without burdening on the movement means that move the specific components of the valve group suitable to perform said obstruction.

The purpose of this invention is to provide a valve group comprising an obturator suitable to perform the actions of obturation and reduction in a controlled manner, without sacrificing simplicity and effectiveness.

This purpose is achieved by a valve group realized according to claim 1. This purpose is also achieved by a pump, according to claim 12, comprising said valve group.

The characteristics and advantages of the valve group according to this invention will be apparent from the following description, given by way of non-limiting example, in accordance with the accompanying figures, wherein:

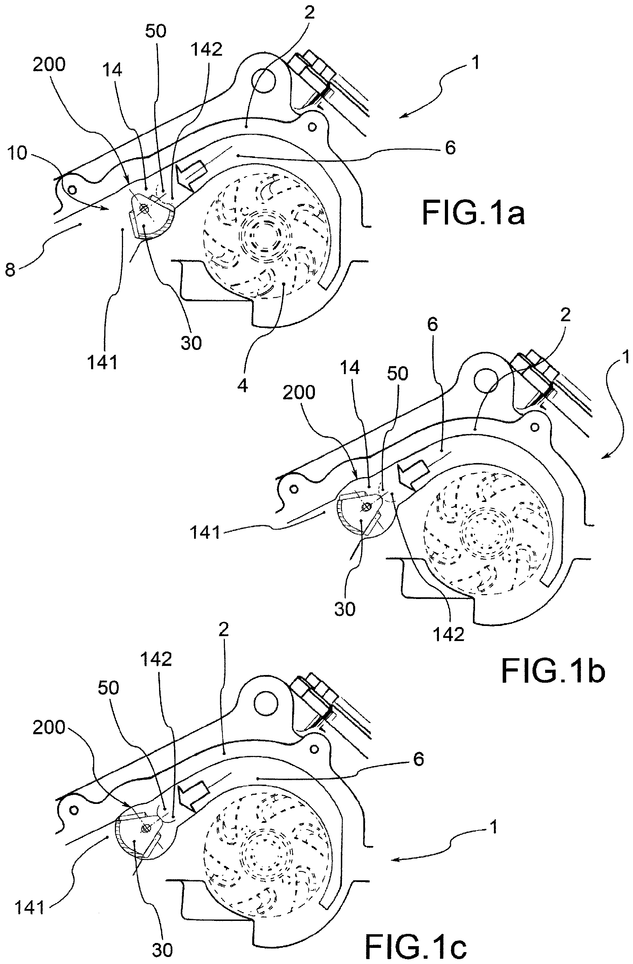

- Figures 1a, 1b and 1c show an example of a cooling pump comprising the valve group according to this invention, in accordance with a first embodiment in, respectively, an open configuration, a reduction configuration and an obturation configuration;

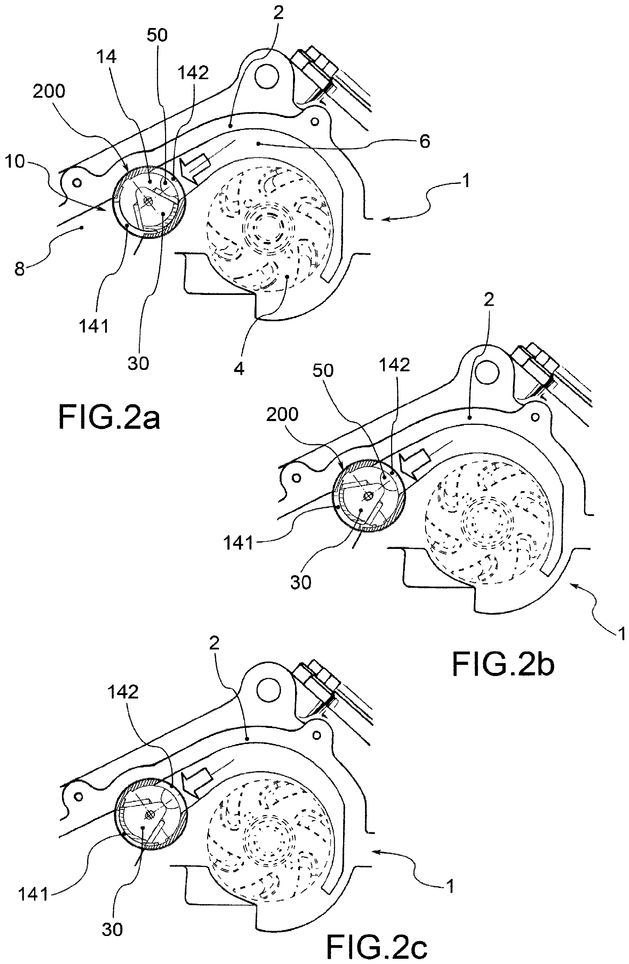

- Figures 2a, 2b and 2c show an example of a cooling pump comprising the valve group according to this invention, in accordance with a further embodiment in, respectively, an open configuration, a reduction configuration and an obturation configuration;

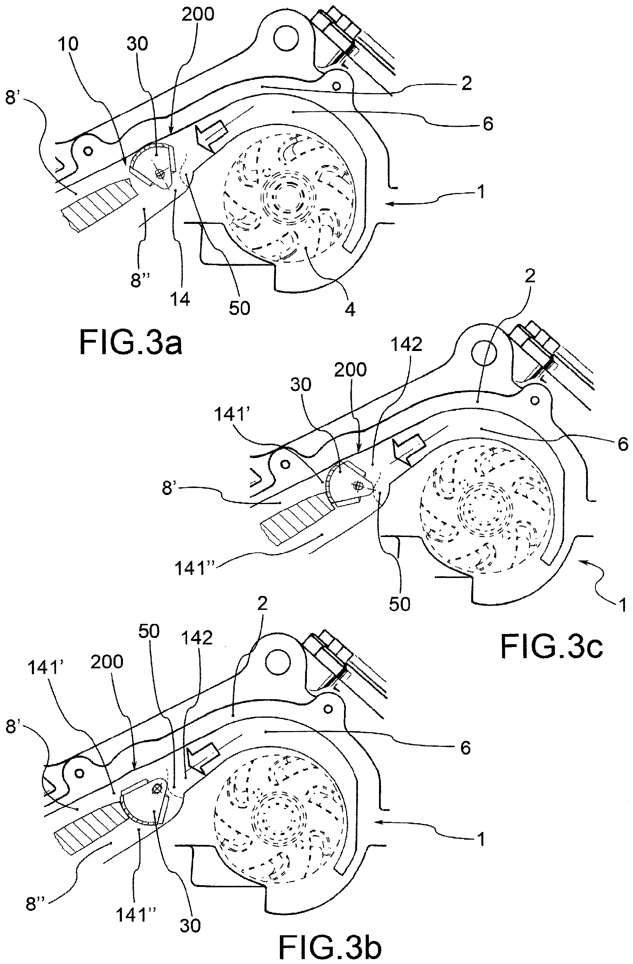

- Figures 3a, 3b and 3c show an example of a cooling pump with two exit channels comprising the valve group according to this invention, in accordance with a first embodiment in, respectively, an open configuration, a reduction configuration and an obturation configuration;

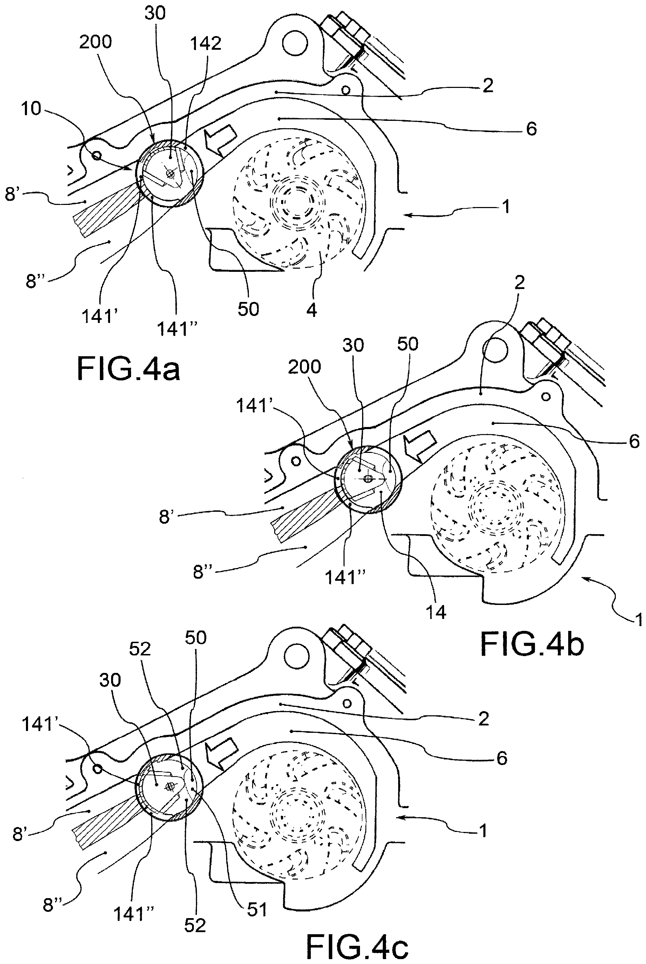

- Figures 4a, 4b and 4c show an example of a cooling pump with two exit channels comprising the valve group according to this invention, in accordance with a further embodiment in, respectively, an open configuration, a reduction configuration and an obturation configuration;

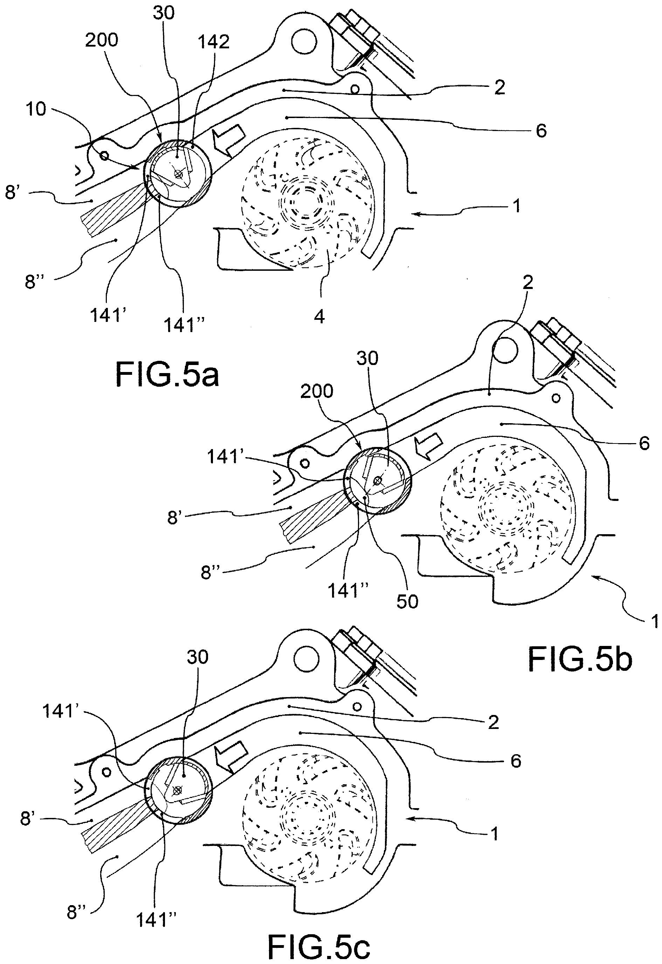

- Figures 5a, 5b and 5c show an example of a cooling pump with two exit channels comprising the valve group according to this invention, in accordance with a further embodiment in, respectively, an open configuration, a reduction configuration and an obturation configuration;
- Figures 6a, 6b and 6c illustrate three axonometric views of a valve group according to this invention in, respectively, an opening, reduction and closing configuration';

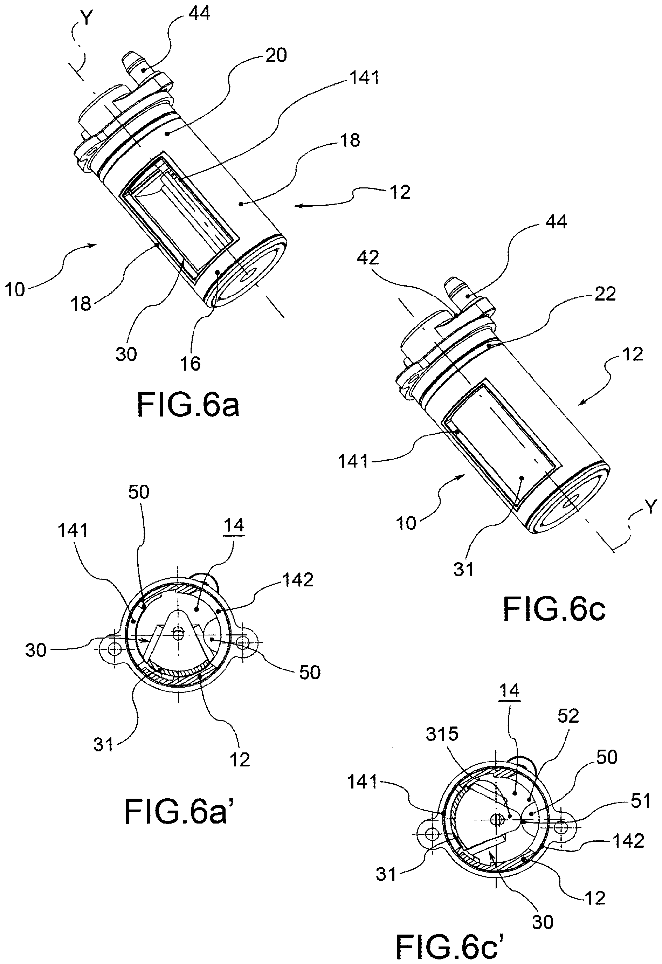

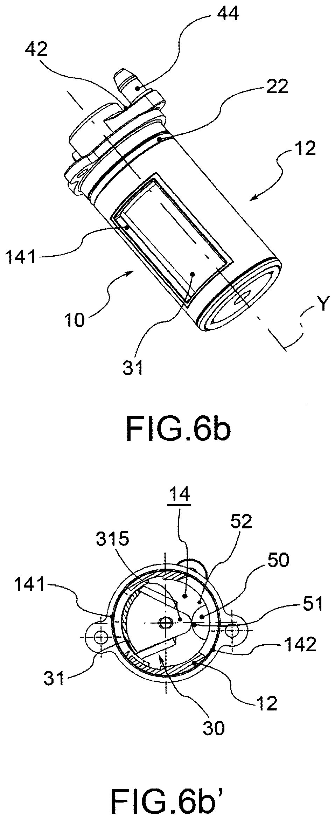

- Figures 6a', 6b' and 6c' show, respectively, sectional views along a transverse plane of the valve group in Figure 6a, 6b and 6c;

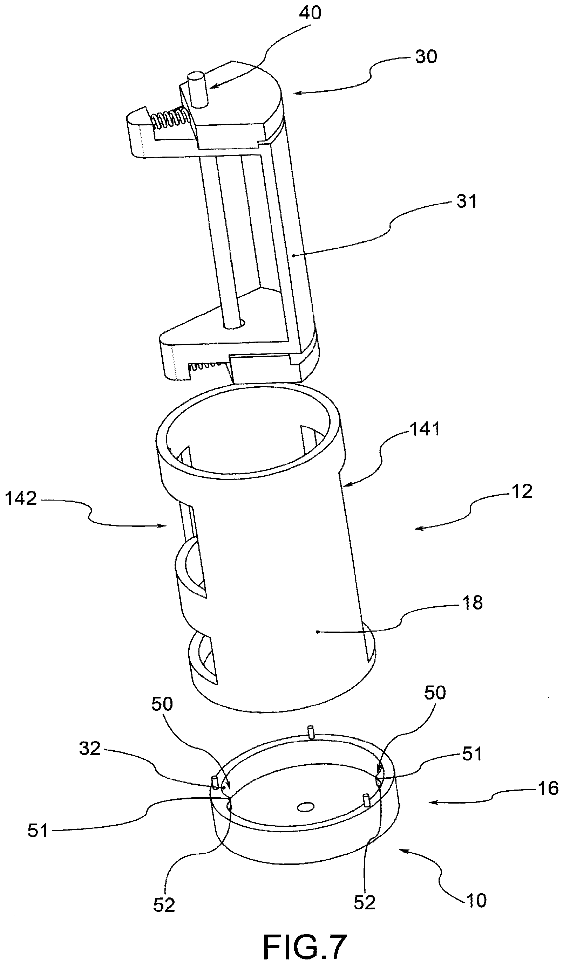

- Figure 7 is an exploded-parts perspective view of a valve group according to an embodiment in an embodiment;

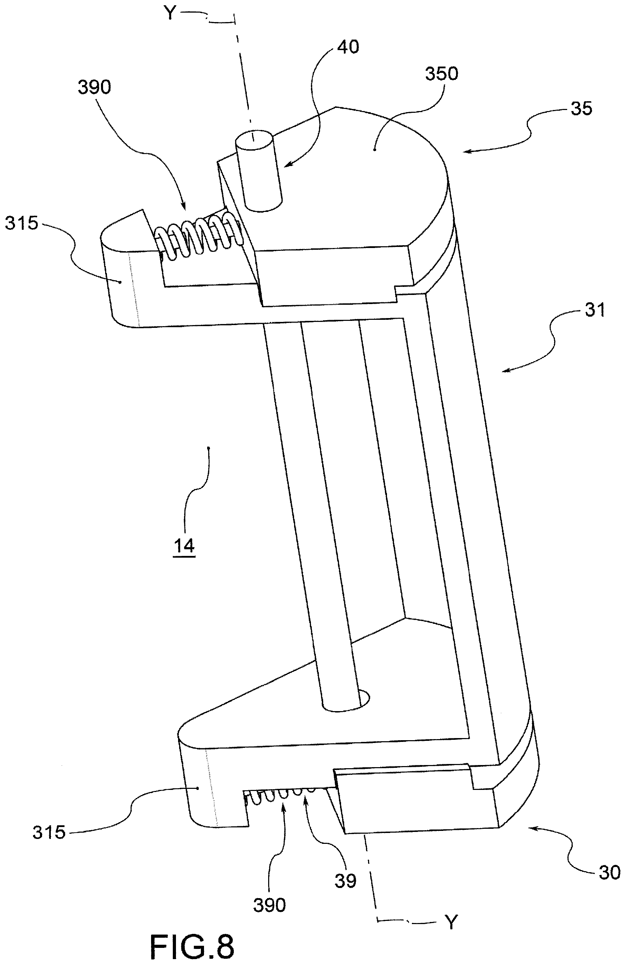

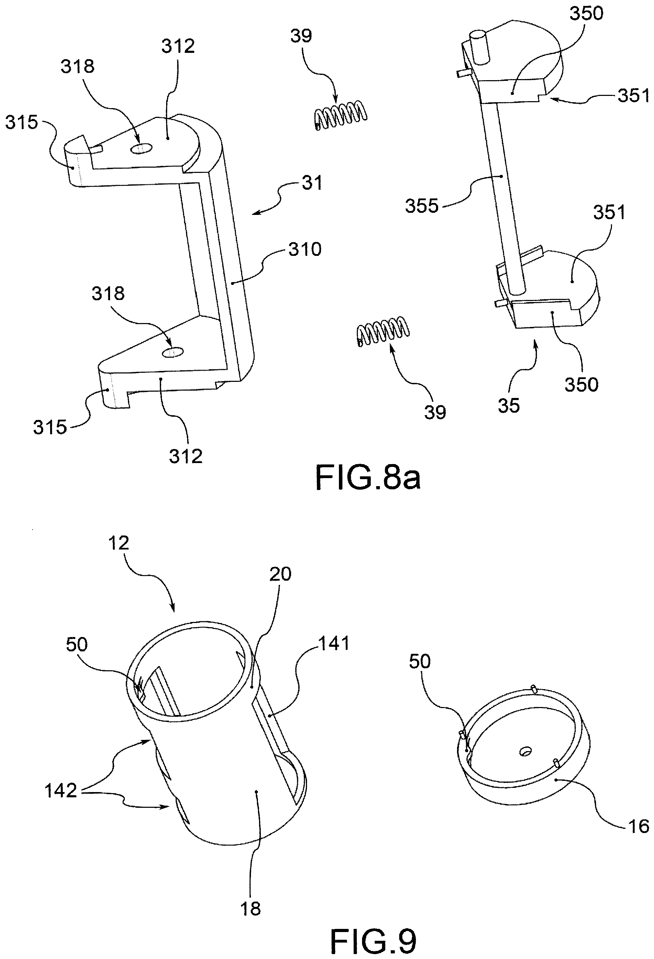

- Figure 8 shows an axonometric view of a part of the obturator valve group in a preferred embodiment;
- Figure 8a shows an exploded-parts perspective view of the obturator of Figure 8;
- Figure 9 shows an exploded-parts perspective view of a valve body comprised in a preferred embodiment of the valve group covered by this invention;

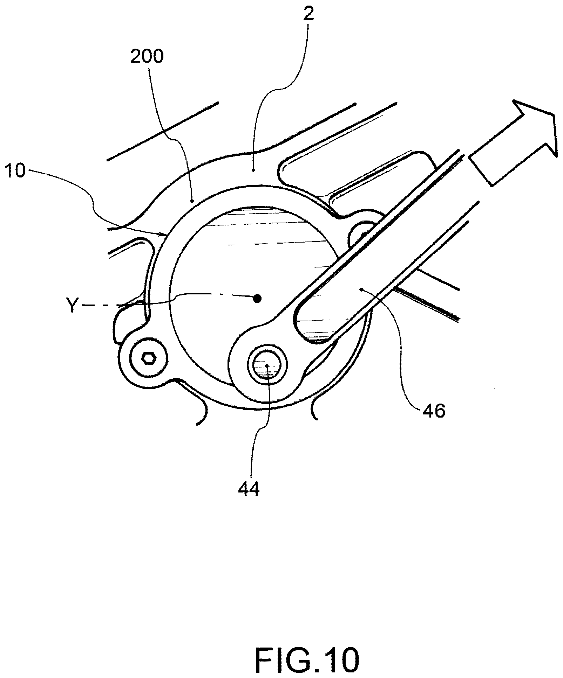

- Figure 10 shows a detail of the pump containing the valve group according to this invention.

According to an embodiment of this invention, reference number 1 indicates a pump of a cooling circuit, in particular for vehicles, comprising a pump body 2 and a rotor 4 housed in the pump body 2, for example of a substantially circular shape. Preferably, the pump 1 is mechanically actuated.

The pump body 2 is connectable to the cooling circuit of the motor and, in particular, is connectable to a section of aspiration circuit, upstream, from which the liquid is aspirated, and to a section of output circuit, downstream, to which the liquid is fed towards the motor under pressure.

The rotor 4, set in rotation about an axis of rotation of the rotor, is suitable to aspirate the liquid from the aspiration section and to send it under pressure to the output section.

Downstream of the rotor, the pump body 2 has a delivery chamber 6, preferably with a volute shape, and at least one delivery duct 8, which extends from the delivery chamber 6. The delivery chamber 6, and the at least one delivery duct 8, are devoid of other openings to further ducts, except the opening of the delivery duct toward the downstream section of the cooling circuit.

In a preferred embodiment, the pump body 2 comprises two delivery ducts 8, a primary delivery duct 8' and a secondary delivery duct 8", respectively suitable to allow the flow of cooling liquid in two separate circuits, for example a first specific cooling circuit for cooling the motor, and a second specific cooling circuit for cooling further components comprised in the vehicle.

In a preferred embodiment, the pump 1 comprises a valve group 10, to limit, on command, the passage of the liquid from the delivery chamber 6 to the at least one delivery duct 8.

In particular, the valve group 10 is suitable to be configured in an open configuration, in which it allows the passage of liquid, an obturation configuration in which it obstructs the passage from the delivery chamber 6 to the delivery duct 8, occluding the transit of liquid from the delivery chamber 6 to the delivery duct 8 or to the delivery ducts 8 and 8' and, preferably, also in a configuration of regulation or chocking, in which the transit of liquid is instead adjusted or reduced, thereby regulating the flow rate of cooling liquid.

Therefore, in some embodiments, when the valve group 10 is in the obturation configuration, the delivery chamber 6 is closed and the liquid remains in it, for example, maintained agitated by the rotor 4 in rotation.

Preferably, in an open configuration, the valve group 10 allows the transit of the greatest possible quantity of cooling liquid.

In further embodiments, the valve group 10 is suitable to act in "mixed" configurations, i.e., for example, in a configuration of partial opening of the valve group 10 is suitable to allow the passage of cooling liquid in the secondary delivery duct 8' while it obstructs, at least partially, the passage of cooling liquid in the primary delivery duct 8", or vice versa.

According to this invention, the pump body 2 has a housing compartment 200 and the valve group 10 is insertable into said housing compartment 200 and extractable from it.

Preferably, the valve group 10 extends along a main axis: the main axis, preferably called rotation axis Y-Y. In addition, preferably, transversely to said rotation axis Y-Y, for the valve group 10, a lead-through duct 14 is identified for the cooling liquid. In other words, the cooling fluid moved by the rotor 4 in the delivery chamber 6 towards the at least one delivery duct 8 is forced by the presence of the valve group 10 to flow inside a passage delimited by the presence of the valve group 10 itself, i.e., the duct 14.

Preferably, the duct 14 is therefore suitable to identify an outlet mouth 141, through which the cooling liquid exits the duct 14 to enter the delivery duct 8. In the embodiment comprising a primary delivery duct 8', and a secondary delivery duct 8", there are thus identifiable, respectively, a primary outlet-mouth 141' and a secondary outlet mouth 141".

In other words, according to a preferred embodiment the duct 14 is the passage inside which the cooling liquid is suitable to flow through the valve group 10 inserted in the housing compartment 200; the outlet mouth 141 is thus the last section of the duct 14 in which the liquid is inside the valve group 10 before entering in the delivery duct 8.

Similarly, the duct 14 is therefore suitable to identify an inlet mouth 142, through which the cooling liquid enters the duct 14.

In other words, according to a preferred embodiment the duct 14 is the passage inside which the cooling liquid is suitable to flow through the valve group 10 inserted in the housing compartment 200; the inlet mouth 142 is thus the first section of the duct 14 in which the liquid is inside the valve group 10 before exiting the delivery chamber 6.

According to a preferred embodiment, the valve group 10 is suitable to be inserted and/or extracted from the valve group 10 in the pump body 2, for example having a cartridge structure.

According to a preferred embodiment, the valve group 10 comprises an obturator 30 rotatable about said rotation axis Y-Y.

Preferably, the obturator 30 extends along said rotation axis Y-Y.

Preferably, said obturator 30 is substantially housed in the duct 14 in such a manner as to be suitable to perform its operations of obstruction; preferably, as illustrated below, a portion of the obturator 30 is suitable to be housed in the duct 14, while other portions of the obturator itself are suitable to delimit, for example above and below, the duct 14.

According to a preferred embodiment, the obturator 30, placed in rotation, is suitable to be placed in an open position where it is suitable to allow the passage of the liquid through the duct 14, and at least one position of obturation in which the obturator 30 is suitable to obstruct and/or reduce the passage of the cooling liquid through the duct 14. In fact, in some embodiments, the obturator 30 is drivable in a plurality of positions, for example as a function of its angular positioning with respect to the rotation axis Y-Y.

According to a preferred embodiment, the obturator 30 comprises an active portion 31 that is drivable in rotation in a manner offset with respect to said rotation axis Y-Y and radially translatable during said rotation.

In particular, as illustrated below, the active portion 31 is engaged by a cam element 50 so as to be movable in a radial direction with respect to said rotation axis Y-Y; for example, the active portion is movable into a rest position, in which it does not oppose the cooling liquid, an obturation position in which the obturator opposes the cooling liquid to block its passage, and a position of reduction of the passage of cooling liquid as it opposes it only in part.

In accordance with a preferred embodiment, wherein the active portion 31 comprises an obstruction wall 310 that extends transversely to the duct 14, it is specifically suitable to interact with the cooling liquid to reduce or obstruct its passage. According to a preferred embodiment, it is said obstruction wall 310 that extends along the duct 14 and is housed in it.

According to a preferred embodiment, the obstruction wall 310 has an arched cross-section and, preferably, its distal side, relative to the centre of rotation, is arched. In other words the obstruction wall 310 is shaped in such a way as to engage the cooling liquid to perform the obstruction or reduction respectively on the inlet mouth 142 and/or on the outlet mouth 141, for example on the primary outlet mouth 141' and a secondary outlet mouth 141".

Preferably, the active portion 31 comprises a command structure 312 that extends transversely with respect to said obstruction wall 310 and is suitable to engage the cam element 50 in such a manner that, in operation with said engagement, the obstruction wall 310 is moved in a predetermined radial position.

According to a preferred embodiment, the command structure 312 is positioned on a side of the obstruction wall 310, for example at its lower end or at its upper end.

In a still further preferred embodiment, such as shown in Figures 6, 7 and 7a, the active portion comprises two command structures 312 on both opposite sides of the obstruction wall 310. Preferably, the duct 14 is delimited superiorly and inferiorly by said command structures 312.

In accordance with the above embodiments, the active portion 31, extending substantially along an axis, preferably parallel to the rotation axis Y-Y, therefore has a substantially L or C shape.

According to a preferred embodiment, the command structure 312 extends from the obstruction wall 310 in a tapered manner comprising at the opposite side of said obstruction wall 310 a command tip 315 suitable to engage the cam element 50. Preferably the command tip 315 is rounded to facilitate engagement and interaction with the cam element 50.

According to a preferred embodiment, the obturator 30 comprises a supporting structure 35, suitable to rotate around the rotation axis Y-Y maintaining its radial position and suitable to provide a support to the active portion 31 in its rotation and in its radial translation. In fact, in other words, the active portion 31, supported by the supporting structure 35, is suitable to slide on it radially, following engagement with the cam element 50.

Preferably, the supporting structure 35 comprises a support portion 350 comprising sliding guides 351 suitable to contain and guide the command structure 312. In other words, on the supporting structure 35, the sliding guides 351 have the shape of a channel in which, respectively, the command structure 312 translates, upon the action of the cam element 50. Preferably, the side walls of the sliding guide 351 hold the command structure 312 to their sides.

In a preferred form of embodiment, wherein the active portion 31 comprises two command structures 312, the supporting structure 35 comprises two support portions 350. Preferably, the two support portions 35 are joined by a support shaft 355 that, in a preferred embodiment, extends along the rotation axis Y-Y.

In a preferred embodiment, the active portion 31 comprises, in the command structure 312, a slot 318 in which said support shaft 355 is suitable to be housed. Preferably, the dimensions of the slot 318 delimit the maximum length of translation of the active portion 31 with respect to the supporting structure 35.

According to a preferred embodiment, the obturator 30 comprises elastic means 39, suitable to engage the supporting structure 35 and the active portion 31 in such a way as to maintain the latter in a radial position of rest.

In other words, the elastic means 39 work in such a way that the cam element 50, on engagement with the active portion 31, to move the latter, opposes the resisting force of said elastic means 39.

Preferably, the elastic means 39 comprise a spring 390 positioned between the support portion 350 and the command tip 315. In the embodiment with two command structures 312, the elastic means 39 comprise two springs 390 positioned between the command tips and the support portions 350. In one embodiment, said springs 390 are coil springs and have their ends acting on the command tip 315 and the support portion 350.

According to some embodiments, the valve group 10 is suitable to comprise a valve body 12 formed of an elongated element along the rotation axis Y-Y, preferably of cylindrical shape. Preferably, said valve body 12 is suitable to contain and protect the obturator 30. Preferably, the lead-through duct 14 passes through said valve body 12.

According to a preferred embodiment, the duct 14 is delimited by a plate 16 on the bottom, by side walls 18, projecting axially from the plate 16, and a tubular head 20, which surmounts and unites the side walls 18 on the opposite side to the plate 16. Preferably, the command structures 312 and the support portions 350 described above are housed in said plate 16 and said head 20.

According to a preferred embodiment, said side walls 18 are internally shaped so as to facilitate the flow of the cooling liquid inside, for example by means of the Venturi effect. Preferably, said side walls 18 are internally shaped so as to facilitate the flow of the cooling liquid inside, also in relation to the obturator.

Preferably, in said embodiments, the inlet and the outlet of the duct 14 are not fictitious sections, as in the embodiments that do not anticipate the valve body.12, but are identifiable on said valve body 12 itself. In other words, the inlet mouth 142 and the at least one outlet mouth 141 are identified on the valve body 12.

According to a preferred embodiment, as a function of the number of delivery ducts 8, a corresponding lead-through duct 14 is identified inside the valve body 12. In other words, in the embodiment comprising the double delivery duct 8, the primary delivery duct 8' and secondary delivery duct 8", a primary outlet mouth 141' and a secondary outlet mouth 141" are identified in the valve body 12.

Therefore, according to said embodiments, the obturator 30 is suitable to be substantially housed inside said valve body 12 in such a way that the active portion 31 is suitable to engage in the obturation position, in that of reduction, the outlet mouth 141, or the inlet mouth 142, comprised in said valve body 12.

In one embodiment, the valve body 12 is made in a single piece; in further embodiments, the valve body 12 it is made in two or more parts engageable to each other.

Preferably, the valve body 12 comprises suitable sealing elements projecting from it towards the outside, for example surrounding the inlet mouths 142 and outlet mouths 141 of the duct 14, suitable to interact in a direct manner with the walls that delimit the housing 200 thus ensuring the seal between said valve body 12 and the pump body 2, to avoid oozing phenomena.

According to a preferred embodiment, the above-mentioned cam element 50, suitable to engage the active portion 31, is formed on the housing compartment 200 and/or on the valve body 12.

Preferably, the cam element 50 is shaped with a nose 51 or a valley 52, in such a way that with the obturator 30 in an angular position of obstruction and/or reduction, for example frontally to an inlet 142 or outlet 141 of the duct 14, the active portion 31 is radially translated from said cam element 50. Therefore, as a function of the shape and dimensions of the cam element 50, for example of the projection of the nose 51 or the depth of the valley 52, the active portion 31 is moved in radial translation.

In a preferred embodiment, it is the command tip 315 to be suitable to be directly engaged with the cam element 50: for example, when the command tip 315 engages the nose 51 of the active portion 31, it is placed in translation overcoming the action of the elastic means 39 and, similarly, when the command tip 315 is facing a valley 52, the action of the elastic means. 39 has the effect that the active portion 31 is maintained in the rest position, i.e., is not translated radially.

Preferably, the cam element 50 extends along an angular portion presenting more than one nose 51 and more than one valley 52, in which said noses 51 and valleys 52 are shapeable and designable in shapes and sizes different from each other.

For example, in a preferred embodiment, the cam element 50 extends over the entire 360° about the rotation axis Y-Y or, in other embodiments, the cam element 50 extends over only certain angular portions.

In other words, the cam element 50 is suitable to move the active portion 31 in translation in a plurality of positions different from each other. For example, as a function of the position of the inlet mouth 142 and outlet mouth 141, for example the primary outlet mouth 141' and the secondary output mouth 141", the active portion 31 is moved in different positions, for example when rotated facing the primary outlet mouth 141', it is positioned in a position of obturation while, when facing the secondary outlet mouth 141", it is positioned in a position of reduction.

According to a preferred embodiment, for every command tip 315, there is a corresponding cam element 50; in the configuration with two command tips 315, on the sides of the active portion 31, there are, therefore, two cam elements 50, similarly shaped, to place the active portion 31 in translation. In some embodiments, the two cam elements 50 have the same shape, while, in other embodiments, they have different shapes so that more radial positions of the active portion 31 are possible.

Furthermore, the pump 1 comprises actuating means suitable to act on the valve group 10 and, in particular, on the obturator 30 to bring it from the position of obturation, and/or from the position of reduction, to the open position and vice versa.

According to a preferred embodiment, the valve group 10 comprises movement means suitable to allow said interaction between the obturator 30 and actuating means. Said movement means comprise a shaft 40 having prevailing extension along the rotation axis Y-Y, connected to the obturator 30. Preferably, the shaft 40 also protrudes axially outward from the head 20 of the valve body 12.

Preferably, moreover, the movement means comprise a disc 42, connected to the shaft 40, in particular to the portion of this projecting from the head 20, and a pin 44, connected to the disc 42 in an eccentric position relative to the rotation axis Y-Y.

Preferably, the actuating means comprise a rod 46 -equipped, on command, with translational motion, connected to pin 44 in rotary manner.

According to a variant- embodiment, the rod is connected to an actuator, such as a vacuum actuator, an electromagnetic actuator, a hydraulic or pneumatic actuator, an electric actuator and the like.

The translation of the rod 46 thus determines the rotation of the obturator 30.

Moreover, according to a preferred embodiment, the valve group comprises a sealing lip inserted on the shaft 40.

In addition, the pump 1 comprises detection means suitable for detecting an operating condition of the vehicle, for example thermal detection means suitable for detecting the temperature of the cooling liquid or the temperature of the parts of motor. Said actuation means are operatively connected to the detection means, to regulate the opening of the obturator.

Preferably, the thermal detection means detect the temperature of the parts of the motor and send this information to the actuation means that, as long as the motor is cold, keep the obturator in the obturation position. Progressively, as the temperature of the motor increases, or according to a predefined function, the actuation means bring the obturator to the open configuration.

In other words, the valve group covered by this invention is presented in embodiments having an obturator component suitable to obstruct and/or partially reduce the duct, at time engaging the valve body, in the embodiments wherein it is provided and, at other times, directly engaging the pump body.

Innovatively, the valve group covered by this invention, and the cooling pump that contains it, are particularly suitable for use as part of a cooling system of a vehicle.

Advantageously, the active portion of the obturator comprised in the valve group is suitable to be commanded in rotation and in translation so as to obstruct or reduce the passage of cooling liquid.

Even more advantageously, obstruction and reduction by positioning the active portion is in the direction of passage of the cooling liquid, as it is due to the positioning by translation in the radial direction of the active portion brought closer to the inlet mouth and/or the outlet mouth frontally to it. Advantageously, as a function of the shape of the cam element and thus of the length of its radial stroke, the active portion occludes the inlet mouth and/or the outlet mouth or is placed at a radial distance for which it reduces the passage of cooling liquid by occluding only a part of the outlet section of the duct, allowing the passage of liquid in the space that remains between the mouth or mouths and active portion, for example at the sides of the latter.

According to a further advantageous aspect, it is possible that the obturator reduces the liquid at the inlet, being moved by the cam element in said reduction position, in front of the inlet mouth of the duct, while blocking the outlet mouth. Advantageously, through the design of the cam element, the movement of the obturator is influenceable in various ways.

Advantageously, the valve group obstructs the passage of cooling liquid in an effective manner; in particular the valve group ensures a high sealing, reducing to zero oozing phenomena and the undesired passing of cooling liquid inside it; preferably, in fact, the gasket seals, for example placed on the obturator or near the mouths of the duct, are stressed by the active portion when it is placed in the obturation, minimizing oozing as much as possible. Advantageously, the fact that the seals are only stressed in predefined phases of the work cycle and, in particular, in some predefined positions, extends their useful life and thus that of the obturator. In other words, friction.and wear of the valve are minimized as much as possible, providing undeniable benefits for its life cycle.

According to a still further advantageous aspect, the valve group, and in particular the duct, and the obturator group, have geometry and section such that the passage of the cooling liquid is facilitated, for example, by exploiting the Venturi effect.

Moreover, advantageously the reduction of the passage of the cooling liquid in the radial direction in turn facilitates the flowing of the liquid.

Advantageously, the cam is suitable to extend over a, more or less long, angular portion and is suitable to be shaped in a manner such as to provide more noses and more valleys so that the active portion is positionable in different radial placements as a function of its angular position, for example in a position of obturation on the outlet mouth and reduction on the inlet mouth; similarly this is also possible with respect to the primary outlet mouth and the secondary outlet mouth.

Advantageously, in the embodiments that provide for the valve body, valve groups having the same valve body, but different obturators, can be inserted interchangeably in the pump group according to the needs that may also occur in the course of the life cycle of the car or motorcycle, so as to change the engagement between the cam and the valve group and thus obtain different placements of the latter. A further advantageous aspect of such embodiments is therefore to completely unleash the design of the pump, and in particular the housing cavity, from the specific needs of the obturator.

It is clear that one skilled in the art, in order to meet specific needs, may make changes to the valve group and pump described above, all contained within the scope of protection defined by the following claims.

## Claims

1. Valve group (10) for a pump (1) of a cooling circuit, in particular for vehicles, wherein the pump comprises a pump body (2) having a housing compartment (200) in which said valve group (10) is inserted in a removable manner, wherein the valve group (10) extends along a rotation axis (Y-Y) and transversally identifies a duct (14) for the passage of cooling liquid, the valve group (10) comprising an obturator (30) rotatable around said rotation axis (Y-Y), wherein the obturator (30) comprises an active portion (31) commanded in rotation in a manner offset to said rotation axis (Y-Y) and **characterized in that** the active portion (31) is radially translatable during said rotation, engaged by a cam element (50), so as to be movable into a rest position, in which it does not oppose the cooling liquid, and into an obturation position in which the obturator opposes the cooling liquid to block its passage, and/or into a position of reduction of the passage of cooling liquid as it opposes it only in part;
the obturator (30) comprises a supporting structure (35), suitable to rotate around the of rotation axis (Y-Y) maintaining its radial position and suitable to provide a support to the active portion (31) in its rotation and in its radial translation; and that the obturator (30) comprises elastic means (39), suitable to engage the supporting structure (35) and the active portion (31) in such a way as to keep the latter in a radial rest position, so that the cam element (50) in engagement with the active portion (31) is opposed to the resistant force of said elastic means (39).

2. Valve group (1) according to claim 1, wherein the active portion (31) comprises:
i) an obstruction wall (310) which extends transversely to the duct (14);
ii) a command structure (312) which extends transversely to said obstruction wall (310), positioned on one side of said obstruction wall (310), preferably both;
wherein the command structure (312) is suitable to engage the cam element (50), and, depending on said engagement, to move the obstruction wall (310) in a predefined radial position.

3. Valve group (1) according to claim 2, wherein the command structure (312) extends from the of obstruction wall (310) in a tapered manner comprising at the opposite side of said obstruction wall (310) a command tip (315), preferably rounded, suitable to engage the cam element (50) .

4. Valve group (1) according to any of the claims 2 or 3, wherein the obstruction wall (310), has an arched cross-section, and preferably its distal side relative to the centre of rotation is arched.

5. Valve group (1) according to any of the claims from 2 to 4, wherein the supporting structure (35) comprises a support portion (350) comprising sliding guides (351) suitable to contain and guide the command structure (312) .

6. Valve group (1) according to claim 5, wherein the elastic means (39) comprise a spring (390) positioned between the support portion (350) and the command tip (315) .

7. Valve group (10) according to any of the previous claims, wherein the valve group (10) comprises a valve body (12), preferably cylindrical, inside which said duct (14) is made, wherein the valve body (12) comprises a plate (16) on the bottom, side walls (18), projecting axially from the plate (16), and a head (20), which surmounts and joins the side walls (18) on the side opposite the plate (16).

8. Valve group (10) according to any of the previous claims, wherein the cam element (50) is made on the housing compartment (200) and/or valve body (12).

9. Valve group (10) according to any of the previous claims, wherein the cam element (50) is shaped, for example with a nose (51) or a valley (52), in such a way that with the obturator (30) in an angular position of obstruction and/or reduction, for example frontally to an inlet (142) or outlet (141) of the duct (14), the active portion (31) is radially translated from said cam element (50) .

10. Valve group (10) according to claim 9, wherein the cam element (50) extends along an angular portion presenting more than one nose (51) and more than one valley (52).

11. Valve group (10) according to any of the previous claims, further comprising, movement means for moving the obturator (30), which comprise a shaft (40) connected to the obturator (30), a pin (44) connected eccentrically to the shaft (40), for example positioned on a disc (42) attached to said shaft (40).

12. Pump (1) for a cooling circuit, in particular for vehicles, comprising:
- a pump body (2);
- a rotor (4) for aspirating cooling liquid through an intake portion and sending said pressurised cooling fluid to a delivery portion, wherein a delivery chamber (6), placed downstream of the rotor (4), and at least one delivery duct (8), connected to the delivery chamber (6), connectable with the delivery portion of the cooling circuit is made in the pump body (2);
- a valve group (10) according to any of the previous claims,
- a cam element (50) engageable by the valve group (10);
wherein the housing compartment (200) of the pump body (2), containing said valve group (10), is positioned between said delivery chamber (6) and at least one delivery duct (8).

13. Pump (1) according to claim 12, comprising actuation means suitable for acting on the obturator (30) of the valve group (10), to take it from the closed position to the open position, in which it permits the passage of cooling liquid, and vice versa.

14. Pump (1) according to claim 13, wherein the drive means comprise a rod (46) movable, on command, for example by an actuator, connected to the pin (44) in a rotary manner, so as to move said pin (44) along its eccentric trajectory.

15. Pump (1) according to any of the claims 13 or 14, comprising detection means suitable for detecting an operating condition of the vehicle, for example thermal detection means suitable for detecting the temperature of the cooling liquid or the temperature of the parts of motor, operatively connected to the drive means which move the obturator (30) depending on what the detection means detect.

## Patentansprüche

1. Ventilgruppe (10) für eine Pumpe (1) eines Kühlkreislaufs, insbesondere für Fahrzeuge, wobei die Pumpe einen Pumpenkörper (2) umfasst, der ein Gehäuseabteil bzw. -fach (200) aufweist, in das die Ventilgruppe (10) auf entnehmbare Art eingefügt ist, wobei sich die Ventilgruppe (10) entlang einer Drehachse (Y-Y) erstreckt und querlaufend einen Kanal bzw. Schacht (14) zum Durchgang von Kühlflüssigkeit identifiziert bzw. bestimmt, wobei die Ventilgruppe (10) einen Obturator (30) umfasst, der um die Drehachse (Y-Y) drehbar ist, wobei der Obturator (30) einen aktiven Abschnitt (31) umfasst, der auf zu der Drehachse (Y-Y) verschobene bzw. versetzte Art in Drehung gesteuert ist, und
**dadurch gekennzeichnet, dass** der aktive Abschnitt (31) während der Drehung radial übersetzbar bzw. verschiebbar ist, und zwar in Eingriff durch ein Nockenelement (50), um in eine Ruheposition, in der er sich der Kühlflüssigkeit nicht entgegensetzt, und in eine Obturationsposition bewegbar zu sein, in der sich der Obturator der Kühlflüssigkeit entgegensetzt, um deren Durchgang zu blockieren, und/oder in eine Position der Reduktion des Kühlflüssigkeitsdurchgangs, während er ihn nur teilweise blockiert;
der Obturator (30) eine Stütz- bzw. Trägerstruktur (35) umfasst, die geeignet ist, sich um die Drehachse (Y-Y) zu drehen, wobei sie ihre radiale Position beibehält, und geeignet, eine Stütze bzw. einen Träger für den aktiven Abschnitt (31) in seiner Drehung und in seiner radialen Verschiebung bereitzustellen;
und dass der Obturator (30) elastische Mittel (39) umfasst, die geeignet sind, mit der Stützstruktur (35) und dem aktiven Abschnitt (31) so in Eingriff zu stehen, dass das letztere in einer radialen Ruheposition gehalten wird, so dass das Nockenelement (50), das in Eingriff mit dem aktiven Abschnitt (31) steht, der Widerstandskraft des elastischen Mittels (39) entgegengesetzt ist.

2. Ventilgruppe (1) nach Anspruch 1, wobei der aktive Abschnitt (31) umfasst:
i) eine Obstruktions- bzw. Blockierungswand (310), die sich quer zu dem Kanal (14) erstreckt;
ii) eine Befehlsstruktur (312), die sich quer zu der Obstruktionswand (310) erstreckt, und zwar auf einer Seite der Obstruktionswand (310) positioniert, vorzugsweise auf beiden;
wobei die Befehlsstruktur (312) geeignet ist, mit dem Nockenelement (50) in Eingriff zu kommen, und, abhängig von dem Eingriff, die Obstruktionswand (310) in eine vordefinierte radiale Position zu bewegen.

3. Ventilgruppe (1) nach Anspruch 2, wobei sich die Befehlsstruktur (312) von der Obstruktionswand (310) auf verjüngende bzw. spitz zulaufende Art erstreckt, und zwar auf der gegenüberliegenden Seite der Obstruktionswand (310) eine Befehlsspitze (315) umfassend, die vorzugsweise gerundet ist und geeignet ist, mit dem Nockenelement (50) in Eingriff zu kommen.

4. Ventilgruppe (1) nach einem der Ansprüche 2 oder 3, wobei die Obstruktionswand (310) einen gewölbten Querschnitt aufweist und dessen distale Seite relativ zu dem Drehzentrum vorzugsweise gewölbt ist.

5. Ventilgruppe (1) nach einem der Ansprüche 2 bis 4, wobei die Stützstruktur (35) einen Stütz- bzw. Trägerabschnitt (350) umfasst, der Gleitführungen (351) umfasst, die geeignet sind, die Befehlsstruktur (312) zu beinhalten und zu führen.

6. Ventilgruppe (1) nach Anspruch 5, wobei die elastischen Mittel (39) eine Feder (390) umfassen, die zwischen dem Stützabschnitt (350) und der Befehlsspitze (315) positioniert ist.

7. Ventilgruppe (10) nach einem der vorhergehenden Ansprüche, wobei die Ventilgruppe (10) einen vorzugsweise zylindrischen Ventilkörper (12) umfasst, in dem der Kanal (14) gebildet ist, wobei der Ventilkörper (12) eine Platte (16) am Boden, Seitenwände (18), die axial von der Platte (16) hervorstehen, und einen Kopf (20) umfasst, der die Seitenwände (18) überragt und auf der Seite gegenüber der Platte (16) verbindet.

8. Ventilgruppe (10) nach einem der vorhergehenden Ansprüche, wobei das Nockenelement (50) auf dem Gehäusefach (200) und/oder dem Ventilkörper gebildet ist.

9. Ventilgruppe (10) nach einem der vorhergehenden Ansprüche, wobei das Nockenelement (50) so geformt ist, beispielsweise mit einer Nase bzw. einem Sporn (51) oder einem Tal bzw. einer Senke (42), dass, wenn der Obturator (30) in einer winkligen Position der Obstruktion und/oder Reduktion ist, beispielsweise frontal zu einem Einlass (142) oder Auslass (141) des Kanals (14), der aktive Abschnitt (31) radial von dem Nockenelement (50) verschoben ist.

10. Ventilgruppe (10) nach Anspruch 9, wobei sich das Nockenelement (50) entlang einem winkligen Abschnitt erstreckt, und zwar mehr als eine Nase (51) und mehr als ein Tal (52) aufweisend.

11. Ventilgruppe (10) nach einem der vorhergehenden Ansprüche, ferner umfassend Bewegungsmittel zum Bewegen des Obturators (30), die einen Schaft (40) umfassen, der mit dem Obturator (30) verbunden ist, und einen Stift bzw. Bolzen (44), der exzentrisch mit dem Schaft (40) verbunden ist, und zwar beispielsweise auf einer Scheibe (42) positioniert, die an dem Schaft (40) befestigt ist.

12. Pumpe (1) für einen Kühlkreislauf, insbesondere für Fahrzeuge, umfassend:
- einen Pumpenkörper (2);
- einen Rotor (4) zum Ansaugen von Kühlflüssigkeit durch einen Einlassabschnitt und zum Schicken der unter Druck gesetzten Kühlflüssigkeit zu einem Lieferabschnitt, wobei eine Lieferkammer (6), die dem Rotor (4) nachgeschaltet platziert ist, und zumindest ein Lieferkanal (8), der mit der Lieferkammer (6) verbunden ist und mit dem Lieferabschnitt des Kühlkreislaufs verbindbar ist, in dem Pumpenkörper (2) gebildet ist;
- eine Ventilgruppe (10) nach einem der vorhergehenden Ansprüche,
- ein Nockenelement (50), das mit der Ventilgruppe (10) in Eingriff bringbar ist;
wobei das Gehäusefach (200) des Pumpenkörpers (2), das die Ventilgruppe (10) enthält, zwischen der Lieferkammer (6) und zumindest einem Lieferkanal (8) positioniert ist.

13. Pumpe (1) nach Anspruch 12, umfassend Betätigungsmittel, die geeignet sind, auf den Obturator (30) der Ventilgruppe (10) zu wirken, um ihn aus der geschlossenen Position in die offene Position zu bringen, in der er den Durchgang von Kühlflüssigkeit erlaubt, und umgekehrt.

14. Pumpe (1) nach Anspruch 13, wobei die Antriebsmittel eine Stange (46) umfassen, die auf Befehl bewegbar ist, beispielsweise durch einen Stellantrieb, der mit dem Bolzen (44) in drehbarer Weise verbunden ist, um den Bolzen (44) entlang seiner exzentrischen Flugbahn zu bewegen.

15. Pumpe (1) nach einem der Ansprüche 13 oder 14, umfassend Detektiermittel, die geeignet sind, einen Betriebszustand des Fahrzeugs zu detektieren, beispielsweise thermische Detektiermittel, die geeignet sind, die Temperatur der Kühlflüssigkeit oder die Temperatur der Motorteile zu detektieren, und zwar bedienbar mit den Antriebsmitteln verbunden, die den Obturator (30) abhängig von dem bewegen, was die Detektiermittel detektieren.

## Revendications

1. Groupe de soupapes (10) pour une pompe (1) d'un circuit de refroidissement, en particulier pour des véhicules, dans lequel la pompe comprend un corps de pompe (2) ayant un compartiment de logement (200) dans lequel ledit groupe de soupapes (10) est inséré de manière amovible, dans lequel le groupe de soupapes (10) s'étend le long d'un axe de rotation (Y-Y) et définit de manière transversale un conduit (14) pour le passage d'un liquide de refroidissement, le groupe de soupapes (10) comprenant un obturateur (30) pouvant tourner autour dudit axe de rotation (Y-Y), dans lequel l'obturateur (30) comprend une portion active (31) commandée en rotation de manière décalée par rapport audit axe de rotation (Y-Y) et **caractérisé en ce que** la portion active (31) peut effectuer une translation radiale pendant ladite rotation, mis en prise par un élément de came (50), de manière à pouvoir se déplacer dans une position de repos, dans laquelle il ne s'oppose pas au liquide de refroidissement, et dans une position d'obturation dans laquelle l'obturateur s'oppose au liquide de refroidissement pour bloquer son passage, et/ou dans une position de réduction du passage du liquide de refroidissement lorsqu'il s'y oppose seulement en partie ;
l'obturateur (30) comprend une structure porteuse (35), appropriée pour tourner autour de l'axe de rotation (Y-Y) maintenant sa position radiale et appropriée pour fournir un support à la portion active (31) pendant sa rotation et sa translation radiale; et **en ce que** l'obturateur (30) comprend des moyens élastiques (39), appropriés pour venir en prise avec la structure porteuse (35) et la portion active (31) de manière à garder cette dernière dans la position de repos radiale, de sorte que l'élément de came (50) en prise avec la portion active (31) s'oppose à la force de résistance desdits moyens élastiques (39).

2. Groupe de soupapes (1) selon la revendication 1, dans lequel la portion active (31) comprend :
i) une paroi d'obstruction (310) qui s'étend de manière transversale au conduit (14) ;
ii) une structure de commande (312) qui s'étend de manière transversale à ladite paroi d'obstruction (310), positionnée sur un côté de ladite paroi d'obstruction (310), de préférence des deux côtés ;
dans lequel la structure de commande (312) est appropriée pour venir en prise avec l'élément de came (50), et, en fonction de ladite mise en prise, pour déplacer la paroi d'obstruction (310) dans une position radiale prédéfinie.

3. Groupe de soupapes (1) selon la revendication 2, dans lequel la structure de commande (312) s'étend depuis le de la paroi d'obstruction (310) en rétrécissant, comprenant au niveau du côté opposé de ladite paroi d'obstruction (310) une pointe de commande (315), de préférence arrondie, appropriée pour venir en prise avec l'élément de came (50).

4. Groupe de soupapes (1) selon l'une quelconque des revendications 2 ou 3, dans lequel la paroi d'obstruction (310), a une section transversale arquée, et de préférence son côté distal par rapport au centre de rotation est arqué.

5. Groupe de soupapes (1) selon l'une quelconque des revendications 2 à 4, dans lequel la structure porteuse (35) comprend une portion de support (350) comprenant des guides coulissants (351) appropriés pour contenir et guider la structure de commande (312).

6. Groupe de soupapes (1) selon la revendication 5, dans lequel les moyens élastiques (39) comprennent un ressort (390) positionné entre la portion de support (350) et la pointe de commande (315).

7. Groupe de soupapes (10) selon l'une quelconque des revendications précédentes, dans lequel le groupe de soupapes (10) comprend un corps de soupape (12), de préférence cylindrique, à l'intérieur duquel ledit conduit (14) est ménagé, dans lequel le corps de soupape (12) comprend une plaque (16) sur le fond, des parois latérales (18), faisant saillie axialement depuis la plaque (16), et une tête (20), qui surmonte et rejoint les parois latérales (18) sur le côté opposé à la plaque (16).

8. Groupe de soupapes (10) selon l'une quelconque des revendications précédentes, dans lequel l'élément de came (50) est ménagé sur le compartiment de logement (200) et/ou le corps de soupape (12).

9. Groupe de soupapes (10) selon l'une quelconque des revendications précédentes, dans lequel l'élément de came (50) est façonné, par exemple avec un ergot (51) ou un creux (52), de telle manière qu'avec l'obturateur (30) dans une position angulaire d'obstruction et/ou de réduction, par exemple de front par rapport à une entrée (142) ou une sortie (141) du conduit (14), la portion active (31) effectue une translation radiale depuis ledit élément de came (50).

10. Groupe de soupapes (10) selon la revendication 9, dans lequel l'élément de came (50) s'étend le long d'une portion angulaire présentant au moins un ergot (51) et au moins un creux (52).

11. Groupe de soupapes (10) selon l'une quelconque des revendications précédentes, comprenant en outre, des moyens de déplacement pour déplacer l'obturateur (30), qui comprennent un arbre (40) connecté à l'obturateur (30), une broche (44) connectée de manière excentrée à l'arbre (40), par exemple positionnée sur un disque (42) fixé audit arbre (40).

12. Pompe (1) pour un circuit de refroidissement, en particulier pour des véhicules, comprenant :
- un corps de pompe (2) ;
- un rotor (4) pour aspirer un liquide de refroidissement à travers une portion d'admission et envoyer ledit fluide de refroidissement sous pression à une portion de distribution, dans laquelle une chambre de distribution (6), placée en aval du rotor (4), et au moins un conduit de distribution (8), connecté à la chambre de distribution (6), pouvant être connecté à la portion de distribution du circuit de refroidissement est ménagé dans le corps de pompe (2) ;
- un groupe de soupapes (10) selon l'une quelconque des revendications précédentes,
- un élément de came (50) pouvant être mis en prise par le groupe de soupapes (10) ;
dans laquelle le compartiment de logement (200) du corps de pompe (2), contenant ledit groupe de soupapes (10), est positionné entre ladite chambre de distribution (6) et au moins un conduit de distribution (8).

13. Pompe (1) selon la revendication 12, comprenant des moyens d'actionnement appropriés pour agir sur l'obturateur (30) du groupe de soupapes (10), pour l'amener de la position fermée à la position ouverte, dans laquelle il permet le passage de liquide de refroidissement, et vice versa.

14. Pompe (1) selon la revendication 13, dans laquelle les moyens d'entraînement comprennent une tige (46) mobile, sur commande, par exemple par un actionneur, connectée à la broche (44) de manière rotative, de manière à déplacer ladite broche (44) le long de sa trajectoire excentrée.

15. Pompe (1) selon l'une quelconque des revendications 13 ou 14, comprenant des moyens de détection appropriés pour détecter une condition opérationnelle du véhicule, par exemple des moyens de détection thermique appropriés pour détecter la température du liquide de refroidissement ou la température des parties du moteur, connectés opérationnellement aux moyens d'entraînement qui déplacent l'obturateur (30) en fonction de ce que détectent les moyens de détection.
